# FASCICULE DE BREVET EUROPEEN

(11) **EP 3 026 295 B1**
(45) Date de publication et mention de la délivrance du brevet: **01.02.2017**
(21) Numéro de dépôt: 15189234.6
(22) Date de dépôt: 09.10.2015
(51) Int. Cl.: F16F 15/14

(54) **DISPOSITIF D'AMORTISSEMENT D'OSCILLATIONS DE TORSION**
VORRICHTUNG ZUR TORSIONSSCHWINGUNGSDÄMPFUNG
DEVICE FOR DAMPING TORSIONAL OSCILLATIONS

(30) Priorité: 28.11.2014 FR 1461664
(43) Date de publication de la demande: 01.06.2016
(73) Titulaire: Valeo Embrayages, 80009 Amiens Cedex 2 (FR)
(72) Inventeur: TONDELLIER, Clément, 80520 WOINCOURT (FR)
(74) Mandataire: Cardon, Nicolas

(56) Documents cités:
- WO-A1-2012/150399
- WO-A1-2013/057440
- DE-A1-102009 042 836
- DE-A1-102010 005 599
- DE-A1-102012 208 264
- DE-A1-102012 211 216
- DE-A1-102012 220 560
- DE-A1-102013 210 043
- DE-A1-102014 202 552

## Description

La présente invention concerne un dispositif d'amortissement d'oscillations de torsion, notamment pour un système de transmission de véhicule automobile.

Dans une telle application, le dispositif d'amortissement d'oscillations de torsion peut être intégré à un système d'amortissement de torsion d'un embrayage apte à relier sélectivement le moteur thermique à la boîte de vitesses, afin de filtrer les vibrations dues aux acyclismes du moteur.

En variante, dans une telle application, le dispositif d'amortissement d'oscillations de torsion peut être intégré à un disque de friction de l'embrayage ou à un convertisseur de couple hydrodynamique.

Un tel dispositif d'amortissement d'oscillations de torsion met classiquement en oeuvre un support et un ou plusieurs corps pendulaires mobiles par rapport à ce support, le déplacement par rapport au support des corps pendulaires étant guidé par des organes de roulement coopérant d'une part avec des pistes de roulement solidaires du support, et d'autre part avec des pistes de roulement solidaires des corps pendulaires. Chaque corps pendulaire comprend par exemple deux masses pendulaires rivetées entre elles.

Des chocs axiaux peuvent se produire entre les corps pendulaires et le support ou entre les organes de roulements et les corps pendulaires. Ces chocs peuvent occasionner une usure prématurée des éléments mentionnés ci-dessus du dispositif d'amortissement et/ou générer des bruits non souhaités, notamment lorsque ces éléments sont en métal.

Afin d'éviter la survenue de tels chocs, il est par exemple connu de la demande DE 10 2006 028 556 de disposer des patins axialement entre le support et les masses pendulaires d'un corps pendulaire.

Le document DE10 2012 208264 A1 est considéré comme étant l'état de la technique le plus proche de l'objet de invention et divulgue les caractéristiques du préambule de la revendication indépendante 1.

Ces patins sont soumis à des forces importantes qui les rendent fragiles et tendent à les endommager.

Il existe un besoin pour bénéficier d'un dispositif d'amortissement d'oscillations de torsion présentant des patins axiaux plus adaptés aux contraintes s'exerçant sur ces derniers.

L'invention vise à répondre à ce besoin et elle y parvient, selon l'un de ses aspects, à l'aide d'un dispositif d'amortissement d'oscillations de torsion, comprenant :
- un support apte à se déplacer en rotation autour d'un axe,
- au moins un corps pendulaire comprenant : une première et une deuxième masses pendulaires espacées axialement l'une par rapport à l'autre et mobiles par rapport au support, la première masse pendulaire étant disposée axialement d'un premier côté du support et la deuxième masse pendulaire étant disposée axialement d'un deuxième côté du support, et au moins un organe de liaison de la première et de la deuxième masses pendulaires appariant lesdites masses,
- au moins un organe de roulement coopérant d'une part avec une piste de roulement définie par le support et d'autre part avec au moins une piste de roulement définie par le corps pendulaire pour guider le déplacement du corps pendulaire par rapport au support, et
- au moins une pièce d'interposition, disposée de manière à éviter la venue en contact selon la direction axiale entre l'une desdites masses pendulaires et l'un au moins de l'organe de roulement et du support, la pièce d'interposition comprenant :
- une portion d'interposition configurée pour empêcher ladite venue en contact selon la direction axiale, et
- au moins une portion de fixation sur l'une des masses pendulaires ou sur l'un de l'organe de roulement et du support, la portion de fixation comprenant au moins deux pattes de fixation et un renfort reliant ces deux pattes.

L'invention concerne également la pièce d'interposition ci-dessus considérée isolément.

Grâce à la présence du renfort, les pattes de fixation de la portion de fixation présentent une meilleure tenue aux forces de cisaillement s'appliquant sur ces dernières lorsque le corps pendulaire se déplace par rapport au support. La durée de vie de la pièce d'interposition, encore appelée « patin », peut ainsi être prolongée.

La pièce d'interposition est notamment réalisée en un matériau amortissant, tel que du plastique ou du caoutchouc.

L'organe de liaison solidarise ensemble la première et la deuxième masse pendulaire, de sorte que le corps pendulaire forme un même ensemble solidaire.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support », et
- « solidaire » signifie « rigidement couplé ».

La portion de fixation peut s'étendre entre une extrémité naissant depuis la portion d'interposition et une extrémité libre, chaque patte de fixation s'étendant entre ces extrémités. Les pattes de fixation peuvent ainsi exclusivement appartenir à la portion de fixation.

Le renfort peut s'étendre sur une longueur comprise entre 5% et 65%, notamment entre 10% et 50%, notamment entre 10% et 30%, de la longueur de chaque patte de fixation, cette longueur étant mesurée entre les deux extrémités de la patte de fixation.

Le renfort peut relier les pattes au niveau de leur extrémité naissant depuis la portion d'interposition. Dans ce cas, le renfort peut être un rebord s'étendant depuis la portion d'interposition. Le renfort peut alors permettre de positionner convenablement la pièce d'interposition sur l'élément qui la porte, notamment de centrer la pièce d'interposition sur l'élément qui la porte.

En variante, le renfort peut être disposé à distance de la portion d'interposition, étant par exemple disposé à mi-longueur des pattes de fixation ou à proximité de leur extrémité libre.

Le renfort peut être réalisé d'une seule pièce avec les pattes de fixation. La portion de fixation peut alors être réalisée d'une seule pièce.

En variante, le renfort est réalisé dans une matière différente de celle utilisée pour les pattes de fixation. Le renfort peut alors être surmoulé sur les pattes de fixation.

Chaque patte de fixation peut comprendre un crochet pour l'encliquetage de la pièce d'interposition sur l'une des masses pendulaires ou sur l'un du support et de l'organe de roulement.

Dans un exemple précis de mise en oeuvre de l'invention, la portion de fixation comprend au moins trois pattes et le renfort relie ces trois pattes deux-à-deux. Les trois pattes peuvent se succéder lorsque l'on se déplace autour d'un axe, cet axe étant notamment parallèle à l'axe de rotation du support.

Le renfort peut alors s'étendre sur 360° autour de cet axe. En variante, toutes les pattes peuvent être reliées deux à deux par le renfort sans que le renfort s'étende sur 360° autour de l'axe.

Le renfort peut présenter une longueur constante ou variable.

La pièce d'interposition peut présenter une autre portion de fixation sur l'une des masses pendulaires ou sur l'un du support et de l'organe de roulement et cette autre portion de fixation peut également présenter des pattes de fixation reliées entre elles par un renfort. Le nombre de pattes de fixation de cette autre portion de fixation peut être inférieur au nombre de pattes de fixation de la portion de fixation mentionnée précédemment. Cette autre portion de fixation comprend par exemple seulement deux pattes similaires à celles décrites précédemment et le renfort peut alors ne s'étendre que sur 180° autour de l'axe selon lequel s'étend globalement cette autre portion de fixation de la pièce d'interposition.

Dans tout ce qui précède, la pièce d'interposition peut être disposée de manière à éviter la venue en contact selon la direction axiale entre ladite masse pendulaire et le support.

La portion d'interposition s'étend par exemple également axialement en regard d'une fraction du support, de manière à éviter cette venue en contact, au moins lorsque le dispositif est dans la position de repos.

Selon un mode de réalisation de l'invention, la piste de roulement définie par le corps pendulaire est définie par l'organe de liaison. Cette piste de roulement peut être formée par une partie du contour de l'organe de liaison, ou par un revêtement déposé sur cette partie du contour de l'organe de liaison. Un tel organe de liaison est encore appelé « entretoise de roulement », servant à la fois à solidariser les masses pendulaires d'une paire entre elles et à participer au guidage du déplacement du corps pendulaire par rapport au support.

L'organe de liaison peut alors être reçu dans une fenêtre ménagée dans le support, et une partie du bord de cette fenêtre peut former la piste de roulement définie par le support.

Deux organes de liaison peuvent alors être prévus pour apparier la première et la deuxième masses pendulaires, et ces organes de liaison peuvent chacun être disposés dans une fenêtre propre ménagée dans le support.

Chaque organe de liaison peut définir une piste de roulement coopérant avec un seul organe de roulement.

Selon ce mode de réalisation, il existe des plans orthogonaux à l'axe de rotation coupant à la fois une piste de roulement définie par le corps pendulaire et une piste de roulement définie par le support.

Selon un autre mode de réalisation de l'invention, le corps pendulaire définit deux pistes de roulement, une piste de roulement étant définie dans la première masse pendulaire et une piste de roulement étant définie dans la deuxième masse pendulaire. La première et la deuxième masses pendulaires présentent par exemple une cavité recevant l'organe de roulement et une partie du bord de cette cavité forme la piste de roulement correspondante. Selon cet autre mode de réalisation, la portion de l'organe de roulement disposée axialement entre la première et la deuxième masse pendulaire est reçue dans une cavité du support, cette cavité étant distincte de la fenêtre dans laquelle l'organe de liaison est reçu. L'organe de roulement peut alors comprendre successivement :
- une portion disposée dans une cavité de la première masse pendulaire et coopérant avec la piste de roulement formée par une partie du bord de cette cavité,
- une portion disposée dans une cavité du support et coopérant avec la piste de roulement formée par une partie du bord de cette cavité, et
- une portion disposée dans une cavité de la deuxième masse pendulaire et coopérant avec la piste de roulement formée par une partie du bord de cette cavité.

Selon cet autre mode de réalisation, il peut ne pas exister de plan orthogonal à l'axe de rotation du support qui coupe à la fois une piste de roulement définie par le support et une piste de roulement définie par le corps pendulaire.

Dans tout ce qui précède, la pièce d'interposition peut être portée par le support ou bien par l'organe de roulement.

En variante, dans tout ce qui précède, la pièce d'interposition peut être portée par l'une de la première et de la deuxième masse pendulaire.

Lorsque la pièce d'interposition est portée par l'une des masses pendulaires, la portion d'interposition de la pièce d'interposition peut comprendre un logement coopérant avec une extrémité axiale de l'organe de roulement lors de tout ou partie du déplacement de l'organe de roulement le long de la piste de roulement définie par le corps pendulaire. En plus de réduire, voire d'éviter, les chocs axiaux mentionnés ci-dessus, une telle pièce d'interposition coopère alors avec l'organe de roulement lors de son déplacement pour guider ce déplacement. Cette coopération de l'extrémité axiale de l'organe de roulement avec le logement peut favoriser un maintien de l'organe de roulement contre la piste de roulement définie par le corps pendulaire.

Toujours lorsque la pièce d'interposition est portée par l'une des masses pendulaires, la portion d'interposition de la pièce d'interposition peut être disposée axialement entre ladite masse pendulaire et l'organe de roulement et cette portion d'interposition peut présenter une surface choisie pour empêcher la venue en contact selon la direction axiale entre l'organe de roulement et ladite masse pendulaire pour plusieurs positions distinctes de l'organe de roulement le long de la piste de roulement définie par le corps pendulaire. Une telle pièce d'interposition assure ainsi un écart axial non nul entre l'organe de roulement et l'une des masses pendulaires pendant au moins une partie du déplacement de l'organe de roulement le long de la piste de roulement définie par le corps pendulaire, notamment pendant la totalité du déplacement de l'organe de roulement le long de la piste de roulement définie par le corps pendulaire.

La forme de la portion d'interposition peut lui permettre de s'interposer axialement entre la masse pendulaire et l'organe de roulement sur toute la dimension radiale de cet organe de roulement lorsque ce dernier roule le long de la piste de roulement définie par le corps pendulaire. Autrement dit, dans un plan orthogonal à l'axe de rotation du support, la portion d'interposition est disposée entre la masse pendulaire et l'organe de roulement sur toute la hauteur de ce dernier.

Le cas échéant, l'une des masses pendulaires porte plusieurs pièces d'interposition et seules certaines d'entre elles présentent un logement tel que mentionné ci-dessus et/ou une pièce d'interposition dont la surface est choisie comme mentionné ci-dessus.

La première masse pendulaire peut porter au moins une pièce d'interposition, telle que décrite ci-dessus, disposée de manière à éviter la venue en contact selon la direction axiale entre cette première masse pendulaire et l'un au moins de l'organe de roulement et du support, et la deuxième masse pendulaire peut porter au moins une pièce d'interposition, telle que décrite ci-dessus, disposée de manière à éviter la venue en contact selon la direction axiale entre cette deuxième masse pendulaire et l'un au moins de l'organe de roulement et du support.

Dans tout ce qui précède :
- le dispositif d'amortissement d'oscillations de torsion présente une position de repos dans laquelle le corps pendulaire est soumis à une force centrifuge mais non à des acyclismes,
- le dispositif d'amortissement d'oscillations de torsion présente une position de butée du corps pendulaire contre le support, à l'issue d'un déplacement dans le sens trigonométrique du corps pendulaire par rapport au support depuis la position de repos, et
- le dispositif d'amortissement d'oscillations de torsion présente une position de butée du corps pendulaire contre le support, à l'issue d'un déplacement dans le sens non-trigonométrique du corps pendulaire par rapport au support depuis la position de repos.

Chaque organe de liaison peut porter au moins un organe d'amortissement de butée permettant d'amortir les chocs liés aux contacts existant entre l'organe de liaison et le support pour l'une au moins de la position de repos et des positions de butée ci-dessus.

L'organe d'amortissement de butée peut être une bande ou un revêtement s'étendant le long d'une partie du contour de l'organe de liaison, comme divulgué par exemple dans la demande DE 10 2012 217 958. En variante, l'organe d'amortissement de butée peut être tel que divulgué dans la demande déposée en France le 14 octobre 2014 sous le numéro 14 59836.

Dans tout ce qui précède, le corps pendulaire peut comprendre :
- deux organes de liaison décalés angulairement et solidarisant entre elles les deux masses pendulaires d'une paire, et
- deux organes d'amortissement de butée, chaque organe d'amortissement de butée étant associé à un organe de liaison.

Deux fenêtres du support consécutives angulairement parlant peuvent alors être associées à un même corps pendulaire, chaque fenêtre recevant l'un des organes de liaison, l'organe d'amortissement de butée associé, et un organe de roulement.

Dans tout ce qui précède, le dispositif peut comprendre :
- au moins un premier corps pendulaire permettant de filtrer une première valeur d'ordre des oscillations de torsion, et
- au moins un deuxième corps pendulaire permettant de filtrer une deuxième valeur d'ordre des oscillations de torsion, différente de la première valeur d'ordre.

Au sens de la présente demande, une valeur d'ordre des oscillations de torsion est filtrée lorsque l'amplitude à cette valeur d'ordre des oscillations de torsion est réduite par le dispositif d'une valeur égale à au moins 10% de l'amplitude avant filtrage.

Le dispositif étant configuré pour filtrer des ordres, la fréquence des oscillations de torsion filtrée par les premiers, respectivement deuxièmes, corps pendulaires varie en fonction de la vitesse de rotation du support. L'emploi du terme « ordre » implique que l'on traite des fréquences variables.

Dans tout ce qui précède, chaque organe de roulement est par exemple un rouleau de section circulaire dans ledit plan orthogonal à l'axe de rotation du support. Les extrémités axiales du rouleau peuvent être dépourvues de rebord annulaire fin. Le rouleau est par exemple réalisé en acier.

Dans tout ce qui précède, la forme des pistes de roulement peut être telle que les corps pendulaires soient uniquement déplacés par rapport au support en translation autour d'un axe fictif parallèle à l'axe de rotation du support.

En variante, la forme des pistes de roulement peut être telle que les corps pendulaires soient déplacés par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Dans tout ce qui précède, chaque organe de roulement peut être uniquement sollicité en compression entre la piste de roulement définie par le support et la piste de roulement définie par le corps pendulaire.

Dans tout ce qui précède, le support peut ou non être réalisé d'une seule pièce.

Le dispositif comprend par exemple plusieurs corps pendulaires, par exemple un nombre compris entre deux et huit, notamment trois ou six corps pendulaires. Les corps pendulaires peuvent alors se succéder autour de l'axe de rotation du support. Tous ces corps pendulaires peuvent être reçus dans le même espace axial.

L'invention a encore pour objet, selon un autre de ses aspects, un composant pour système de transmission d'un véhicule automobile, le composant étant notamment un double volant amortisseur, un convertisseur de couple hydrodynamique ou un disque de friction, comprenant un dispositif d'amortissement d'oscillations de torsion tel que défini ci-dessus.

Le support du dispositif d'amortissement d'oscillations de torsion peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

L'invention pourra être mieux comprise à la lecture de la description qui va suivre d'exemples non limitatifs de mise en oeuvre de celle-ci et à l'examen du dessin annexé sur lequel :
- la figure 1 représente de façon schématique un dispositif d'amortissement de torsion auquel peuvent être intégrées des pièces d'interposition selon l'invention,
- la figure 2 représente un détail du dispositif de la figure 1 auquel des pièces d'interposition selon un exemple de mise en oeuvre de l'invention sont intégrées, le dispositif étant alors au repos,
- la figure 3 représente un détail de la figure 2,
- la figure 4 est une vue similaire à la figure 2, le dispositif étant cette fois en position de butée contre le support à l'issue d'un déplacement depuis la position de repos,
- la figure 5 représente un détail de la figure 4,
- la figure 6 est une vue en coupe selon VI-VI de la figure 2,
- la figure 7 représente en isolé une des pièces d'interposition visibles sur la figure 2,
- la figure 8 est une vue en coupe, dans un plan contenant l'axe de rotation du dispositif, de la pièce d'interposition lorsqu'elle est portée par l'une des masses pendulaires du corps pendulaire du dispositif, et
- la figure 9 est une vue partielle d'un autre exemple de dispositif d'amortissement d'oscillations de torsion dans lequel peuvent être intégrées des pièces d'interposition selon l'invention.

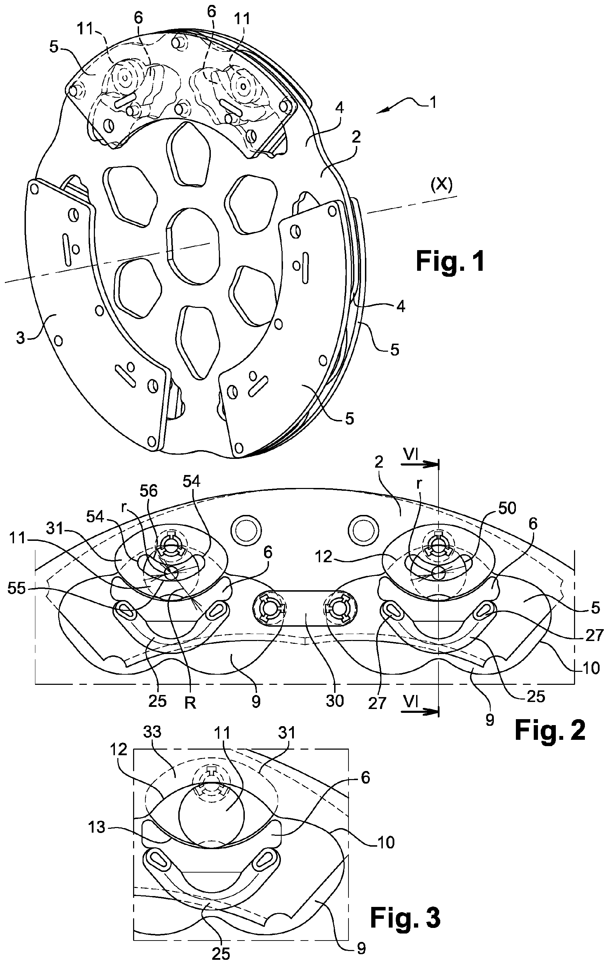

On a représenté sur la figure 1 un dispositif d'amortissement 1 auquel peuvent être intégrées une ou plusieurs pièces d'interposition selon l'invention. Ces pièces d'interposition sont encore appelées « patins ». Le dispositif d'amortissement 1 est de type oscillateur pendulaire. Le dispositif 1 est notamment apte à équiper un système de transmission de véhicule automobile, étant par exemple intégré à un composant non représenté d'un tel système de transmission, ce composant étant par exemple un double volant amortisseur, un convertisseur de couple hydrodynamique ou un disque de friction.

Ce composant peut faire partie d'une chaîne de propulsion d'un véhicule automobile, cette dernière comprenant un moteur thermique notamment à trois ou quatre cylindres.

Sur les figures 1 à 3, le dispositif 1 est au repos. De manière connue, un tel composant peut comprendre un amortisseur de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Dans l'exemple considéré, trois corps pendulaires 3 sont prévus, étant répartis de façon uniforme sur le pourtour de l'axe X.

Le support 2 du dispositif d'amortissement 1 peut être constitué par :
- un élément d'entrée de l'amortisseur de torsion,
- un élément de sortie ou un élément de phasage intermédiaire disposé entre deux séries de ressort de l'amortisseur, ou
- un élément lié en rotation à un des éléments précités et distinct de ces derniers, étant alors par exemple un support propre au dispositif 1.

Le support 2 est notamment une rondelle de guidage ou une rondelle de phasage.

Dans l'exemple considéré, le support 2 présente globalement une forme d'anneau comportant deux côtés opposés 4 qui sont ici des faces planes.

Comme on peut notamment le voir sur la figure 1, chaque corps pendulaire 3 comprend dans l'exemple considéré :
- deux masses pendulaires 5, chaque masse pendulaire 5 s'étendant axialement en regard d'un côté 4 du support 2, et
- deux organes de liaison 6 solidarisant les deux masses pendulaires 5.

Les organes de liaison 6, encore appelés « entretoises », sont dans l'exemple considéré décalés angulairement.

Chaque organe de liaison 6 s'étend en partie dans une fenêtre 9 ménagée dans le support. Dans l'exemple considéré, la fenêtre 9 définit un espace vide à l'intérieur du support, cette fenêtre étant délimitée par un contour fermé 10.

Le dispositif 1 comprend encore dans l'exemple considéré des organes de roulement 11 guidant le déplacement des corps pendulaires 3 par rapport au support 2. Les organes de roulement 11 sont ici des rouleaux dont au moins une portion présente une section transversale circulaire de rayon R.

Dans l'exemple décrit, le mouvement par rapport au support 2 de chaque corps pendulaire 3 est guidé par deux organes de roulement 11, chacun d'entre eux coopérant avec l'un des organes de liaison 6 du corps pendulaire 3.

Chaque organe de roulement 11 coopère d'une part avec une piste de roulement 12 définie par le support 2, et qui est ici formée par une partie du contour 10 de la fenêtre 9, et d'autre part avec une piste de roulement 13 définie par le corps pendulaire 3, et qui est ici formée par une partie du contour extérieur de l'organe de liaison 6.

Plus précisément, chaque organe de roulement 11 interagit au niveau radialement intérieur avec la piste de roulement 13 et au niveau radialement extérieur avec la piste de roulement 12 lors de son déplacement par rapport au support 2 et au corps pendulaire 3, étant par exemple uniquement sollicité en compression entre les pistes de roulement 12 et 13. Comme représenté par exemple sur la figure 3, les pistes de roulement 12 et 13 présentent dans l'exemple décrit des portions radialement en regard l'une de l'autre.

Dans les exemples considérés, le dispositif 1 comprend des organes d'amortissement de butée 25. Chaque organe de liaison 6 porte par exemple un organe d'amortissement de butée 25.

Ces organes d'amortissement de butée 25 peuvent, comme représenté sur la figure 1, être tels que décrits dans la demande déposée en France le 14 octobre 2014 sous le numéro 14 59836. En variante, ces organes d'amortissement de butée 25 peuvent se présenter sous la forme d'un revêtement entourant dans un plan orthogonal à l'axe de rotation une partie du pourtour de l'organe de liaison 6, comme représenté sur les figures 2 à 5. Un tel organe d'amortissement de butée 25 peut présenter des tiges axiales 27 dont les extrémités sont reçues dans une des masses pendulaires 5, de manière à solidariser cet organe d'amortissement de butée 25 avec les masses pendulaires d'un corps pendulaire 3.

Ces organes d'amortissement de butée 25 permettent d'amortir les chocs liés à la venue en butée contre le support 2 du corps pendulaire 3 à l'issue d'un déplacement depuis la position de repos, quel que soit le sens de ce déplacement. Un tel déplacement s'effectue dans des plans orthogonaux à l'axe de rotation X, et non axialement. Les organes d'amortissement de butée 25 peuvent par ailleurs permettre d'amortir les chocs liés à la chute radiale du corps pendulaire 3 pour de faibles vitesses de rotation du moteur thermique du véhicule, par exemple lors du démarrage ou de l'arrêt du véhicule.

Le dispositif 1 comprend des pièces d'interposition 30 et 31 qui vont maintenant être décrites. Chaque pièce d'interposition 30 ou 31 est notamment réalisée en un matériau amortissant, tel que du plastique ou du caoutchouc.

Dans l'exemple considéré, les pièces d'interposition 30 et 31 sont portées par une masse pendulaire 5, et chaque masse pendulaire 5 d'un corps pendulaire 3 porte des pièces d'interposition 30 et 31.

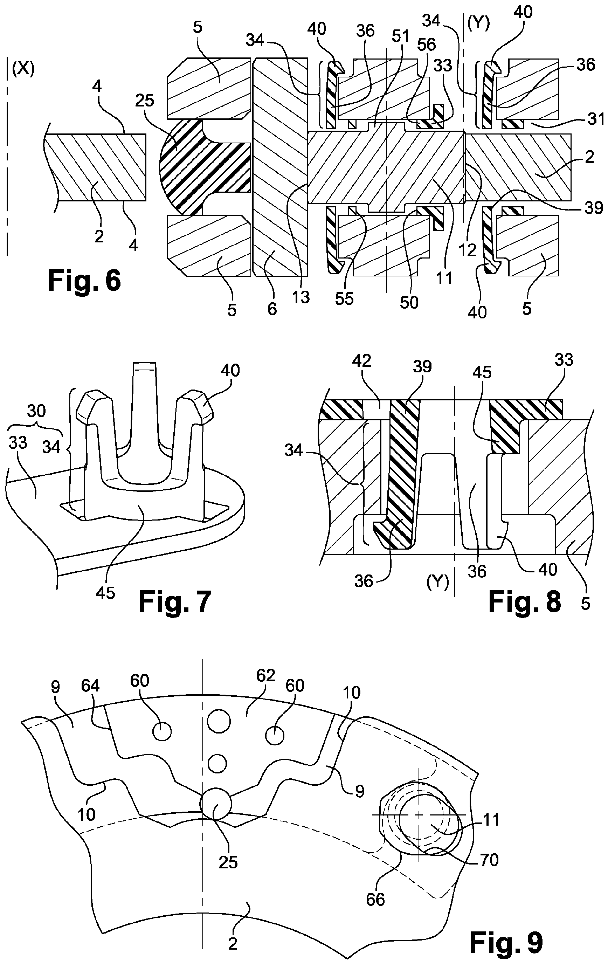

Chaque pièce d'interposition 30 ou 31 est dans l'exemple considéré disposée de manière à éviter la venue en contact selon la direction axiale, c'est-à-dire selon l'axe X, entre la masse pendulaire 5 qui la porte et le support 2. Chaque pièce d'interposition 30 ou 31 comprend, comme représenté plus clairement sur les figures 7 et 8 :
- une portion d'interposition 33 configurée pour empêcher cette venue en contact selon l'axe X, et
- au moins une portion de fixation 34 sur la masse pendulaire 5. Cette portion de fixation 34 comprend dans les exemples considérés trois pattes de fixation 36 qui s'étendent globalement autour d'un axe Y parallèle à l'axe X, entre une extrémité 39 prenant naissance au niveau de la portion d'interposition 33 et une extrémité libre 40 permettant la fixation sur la masse pendulaire 5. Chaque extrémité libre 40 forme dans l'exemple considéré un crochet d'encliquetage de la patte de fixation 36 sur la masse pendulaire 5.

Dans les exemples considérés, une découpe 42 est ménagée dans la portion d'interposition 33 radialement en regard de chaque patte de fixation 36 et radialement extérieurement à cette patte 36 depuis l'axe Y.

Toujours dans les exemples considérés, un renfort 45 relie les pattes de fixation 36 deux à deux. Le renfort est, dans les exemples décrits, ménagé tout autour de l'axe Y et il est formé par un rebord s'étendant le long d'une fraction des pattes de fixation 36 depuis la portion d'interposition 33. Le renfort 45 présente ici une longueur constante tout autour de l'axe Y.

Le renfort 45 peut conférer aux pièces d'interposition 30 ou 31 une meilleure résistance aux forces de cisaillement s'appliquant sur ces dernières lors du déplacement du corps pendulaire 3 par rapport au support 2. En outre, comme on peut le voir notamment sur la figure 8, le renfort 45 peut permettre de centrer la pièce d'interposition 30 ou 31 dans le trou ménagé dans la masse pendulaire 5 pour recevoir la portion de fixation 34.

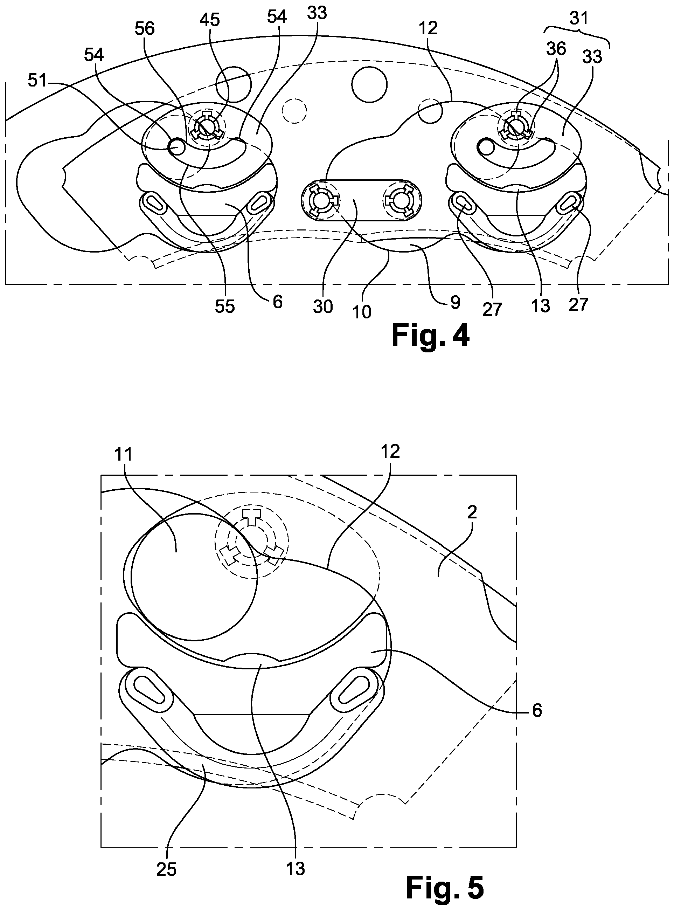

Comme représenté sur les figures 2 et 4, une masse pendulaire 5 ne porte par exemple qu'une seule pièce d'interposition 30, et cette dernière peut être disposée sur la masse pendulaire 5 sensiblement à mi distance entre les extrémités angulaires de cette masse pendulaire 5. La position de cette pièce d'interposition 30 peut être choisie pour que cette dernière soit toujours au moins en partie axialement en regard du support 2, de manière à empêcher les chocs axiaux entre ce support 2 et cette masse pendulaire 5.

Dans l'exemple considéré, chaque pièce d'interposition 30 et chaque pièce d'interposition 31 présente deux portions de fixation 34.

Les pièces d'interposition 31 vont maintenant être décrites. Elles différent des pièces d'interposition 30 par leur nombre sur une même masse pendulaire 5, par la forme de leur portion d'interposition 33 et par le fait qu'elles peuvent coopérer avec une extrémité axiale 51 d'un organe de roulement 11 associé au corps pendulaire 3. On constate sur la figure 6 que les deux portions de fixation 34 d'une même pièce d'interposition 31 sont différentes. L'une des portions de fixation 34, qui est la plus radialement extérieure, est similaire à celle décrite précédemment. L'autre portion de fixation 34, qui est la plus radialement intérieure, ne présente ici que deux pattes de fixation 36 et elle est ménagée directement radialement en regard de la piste de roulement 13 définie par l'organe de liaison 6.

Chaque pièce d'interposition 31 est dans l'exemple considéré associée à un organe de liaison 6 du corps pendulaire 3 et elle présente une portion d'interposition 33 disposée axialement entre la masse pendulaire 5 qui la porte et l'organe de roulement 11. La surface de cette portion d'interposition 33 est ici suffisante pour empêcher la venue en contact selon la direction axiale entre l'organe de roulement 11 et cette masse pendulaire 5 pour toutes les positions de l'organe de roulement 11 le long de la piste de roulement 13 définie par l'organe de liaison 6. Ainsi, que le corps pendulaire 3 soit :
- dans une position de repos, lorsque le dispositif d'amortissement d'oscillations de tension 1 est au repos, ce qui est représenté sur les figures 2 et 3,
- dans une position de butée contre le support 2 à l'issue du déplacement du corps pendulaire 3 depuis la position de repos, ce qui est représenté sur les figures 4 et 5, ou
- dans toute position intermédiaire entre ces positions,
la portion 33 de la pièce d'interposition vient entre l'organe de roulement 11 et ladite masse pendulaire 5 pour empêcher la venue en contact selon l'axe X entre ces pièces 11 et 5.

Comme représenté sur les figures 2 à 5, la portion d'interposition 33 présente par exemple, dans le plan des figures une surface dont le contour extérieur est sensiblement en forme d'ellipse.

La portion d'interposition 33 s'étend par exemple radialement extérieurement par rapport à la piste de roulement 13 définie par l'organe de liaison 6, et une partie du contour extérieur de cette portion d'interposition 33 peut être directement en regard de toute la piste de roulement 13. Cette partie du contour extérieur de la portion d'interposition 33 présente par exemple la même forme que la forme de la piste de roulement 13.

La portion d'interposition 31 qui vient d'être décrite peut aussi présenter une surface lui permettant de venir en permanence s'interposer axialement entre le support 2 et la masse pendulaire 5 qui la porte.

Comme on peut le voir sur les figures 2, 4 et 6, chaque portion d'interposition 33 peut en outre comprendre un logement 50 coopérant avec une extrémité axiale 51 de l'organe de roulement 11 lors du déplacement de l'organe de roulement 11 le long de la piste de roulement 13 définie par l'organe de liaison 6.

Chaque extrémité axiale 51 de l'organe de roulement 11 définit par exemple un pion de rayon r, inférieur au rayon R du reste de l'organe de roulement 11, et ce pion 51 coulisse dans le logement 50 lors du déplacement de l'organe de roulement 11 le long de la piste de roulement 13 définie par l'organe de liaison 6.

Dans l'exemple considéré, le logement 50 est traversant, il s'étend entre deux extrémités angulaires 54 et il est radialement délimité par un bord radialement intérieur 55 et par un bord radialement extérieur 56.

Comme on peut le voir sur les figures 4 et 5, lorsque le corps pendulaire 3 est en butée contre le support 2, le pion 51 peut alors se trouver en butée contre une des extrémités angulaires 54 du logement 50.

Les pièces d'interposition 31 peuvent encore être autres.

La portion d'interposition 33 peut présenter une surface lui permettant de s'interposer axialement entre l'organe de roulement 11 et la masse pendulaire 5 portant cette pièce d'interposition dans certaines positions seulement de l'organe de roulement 11 le long de la piste de roulement 13 définie par l'organe de liaison 6. La piste de roulement 13 présente une longueur mesurée le long de ladite piste entre l'endroit de la piste avec lequel coopère l'organe de roulement 11 lorsque le dispositif 1 est au repos et l'endroit de ladite piste avec lequel coopère l'organe de roulement 11 lorsque le corps pendulaire 3 est dans une position de butée à l'issue de son déplacement depuis sa position de repos. La surface de la portion d'interposition 33 de la pièce d'interposition 31 peut permettre d'éviter la venue en contact selon l'axe X, uniquement lorsque l'organe de roulement 11 se déplace le long d'une fraction de la piste de roulement 13 dont la longueur est égale à 50%, par exemple, de la longueur de la piste de roulement 13.

Le logement 50 peut ne coopérer avec le pion 51 que lors d'une partie du déplacement de l'organe de roulement 11 le long de la piste de roulement 13 définie par l'organe de liaison 6.

On va maintenant décrire en référence à la figure 9 un autre dispositif 1 auquel des pièces d'interposition 30 et/ou 31 telles que décrites ci-dessus peuvent être intégrées.

Ce deuxième exemple diffère de celui décrit en référence aux figures 1 à 8 par le fait que le corps pendulaire 3 et le support 2 présentent une structure différente.

La fenêtre 9 est ici ouverte radialement vers l'extérieur, le contour 10 ne définissant alors pas une ligne fermée.

Les deux masses pendulaires 5 sont dans l'exemple de la figure 9 reliées via une pluralité de rivets 60 qui sont reçus dans une pièce de guidage 62. Cette pièce de guidage 62 présente comme on peut le voir sur la figure 8 des bords angulaires 64 dont la forme peut coopérer avec celle du contour 10 de l'ouverture 9 pour former une butée pour le déplacement du corps pendulaire 3 par rapport au support 2.

Dans cet exemple, des cavités 66 distinctes de la fenêtre 9 sont ménagées dans le support 2 et sont sensiblement axialement en regard d'autres cavités 70 ménagées dans les masses pendulaires 5. Chaque organe de roulement 11 est à la fois reçu dans une cavité 66 et dans une cavité 70, de manière à guider le déplacement du corps pendulaire 3 par rapport au support 2.

L'invention n'est pas limitée aux exemples qui viennent d'être décrits.

## Revendications

1. Dispositif (1) d'amortissement d'oscillations de torsion, comprenant :
- un support (2) apte à se déplacer en rotation autour d'un axe (X),
- au moins un corps pendulaire (3) comprenant : une première et une deuxième masses pendulaires (5) espacées axialement l'une par rapport à l'autre et mobiles par rapport au support (2), la première masse pendulaire (5) étant disposée axialement d'un premier côté (4) du support (2) et la deuxième masse pendulaire (5) étant disposée axialement d'un deuxième côté (4) du support (2), et au moins un organe de liaison (6) de la première et de la deuxième masses pendulaires (5) appariant lesdites masses,
- au moins un organe de roulement (11) coopérant d'une part avec une piste de roulement (12) définie par le support (2) et d'autre part avec au moins une piste de roulement (13) définie par le corps pendulaire (3) pour guider le déplacement du corps pendulaire (3) par rapport au support (2), et
- au moins une pièce d'interposition (30, 31), disposée de manière à éviter la venue en contact selon la direction axiale (X) entre l'une desdites masses pendulaires (5) et l'un au moins de l'organe de roulement (11) et du support (2),
**caractérisé en ce que** la pièce d'interposition (30, 31) comprenant :
- une portion d'interposition (33) configurée pour empêcher ladite venue en contact selon la direction axiale (X), et
- au moins une portion de fixation (34) sur l'une des masses pendulaires (5) ou sur l'un de l'organe de roulement (11) et du support (2), la portion de fixation (34) comprenant au moins deux pattes de fixation (36) et un renfort (45) reliant ces deux pattes (36).

2. Dispositif selon la revendication 1, la portion de fixation (34) s'étendant entre une extrémité (39) naissant depuis la portion d'interposition (33) et une extrémité libre (40), chaque patte de fixation (36) s'étendant entre ces extrémités (39, 40).

3. Dispositif selon la revendication 2, le renfort (45) s'étendant sur une longueur comprise entre 5% et 65%, notamment entre 10% et 50%, de la longueur mesurée entre ses deux extrémités (39, 40) de chaque patte de fixation (36).

4. Dispositif selon la revendication 2 ou 3, le renfort (45) reliant les pattes (36) au niveau de leur extrémité (39) naissant depuis la portion d'interposition (33).

5. Dispositif selon la revendication 4, le renfort (45) étant un rebord s'étendant depuis la portion d'interposition (33).

6. Dispositif selon l'une quelconque des revendications 1 à 5, chaque patte de fixation (36) comprenant un crochet pour l'encliquetage de la pièce d'interposition (30, 31) sur l'une des masses pendulaires (5) ou sur l'un du support (2) et de l'organe de roulement (11).

7. Dispositif selon l'une quelconque des revendications précédentes, la portion de fixation (34) comprenant au moins trois pattes (36) et le renfort (45) reliant ces trois pattes (36) deux-à-deux.

8. Dispositif selon l'une quelconque des revendications précédentes, la piste de roulement (13) définie par le corps pendulaire (3) étant définie par l'organe de liaison (6).

9. Dispositif selon l'une quelconque des revendications précédentes, la pièce d'interposition (30, 31) étant portée par l'une de la première et de la deuxième masse pendulaire (5).

10. Dispositif selon la revendication 9, la portion d'interposition (33) de la pièce d'interposition (31) comprenant un logement (50) coopérant avec une extrémité axiale (51) de l'organe de roulement (11) lors de tout ou partie du déplacement de l'organe de roulement (11) le long de la piste de roulement (13) définie par le corps pendulaire (2).

11. Dispositif selon la revendication 9 ou 10, la portion d'interposition (33) de la pièce d'interposition (31) étant disposée axialement entre ladite masse pendulaire (5) et l'organe de roulement (11) et cette portion d'interposition (31) présentant une surface choisie pour empêcher la venue en contact selon la direction axiale (X) entre l'organe de roulement (11) et ladite masse pendulaire (5) pour plusieurs positions distinctes de l'organe de roulement (11) le long de la piste de roulement (13) définie par le corps pendulaire (3).

12. Dispositif selon l'une quelconque des revendications 9 à 11, la première masse pendulaire (5) portant au moins une pièce d'interposition (30, 31) disposée de manière à éviter la venue en contact selon la direction axiale (X) entre cette première masse pendulaire (5) et l'un au moins de l'organe de roulement (11) et du support (2), et la deuxième masse pendulaire (5) portant au moins une pièce d'interposition (30, 31) disposée de manière à éviter la venue en contact selon la direction axiale (X) entre cette deuxième masse pendulaire (5) et l'un au moins de l'organe de roulement (11) et du support (2).

13. Composant pour système de transmission d'un véhicule automobile, le composant étant notamment un double volant amortisseur, un convertisseur de couple hydrodynamique ou un disque de friction, comprenant un dispositif d'amortissement (1) selon l'une quelconque des revendications 1 à 12.

14. Composant selon la revendication 13, le support (2) du dispositif étant l'un parmi :
- un voile du composant,
- une rondelle de guidage du composant,
- une rondelle de phasage du composant, ou
- un support distinct dudit voile, de ladite rondelle de guidage et de ladite rondelle de phasage

## Patentansprüche

1. Vorrichtung (1) zur Dämpfung von Torsionsschwingungen, die enthält:
- einen Träger (2), der sich in Drehung um eine Achse (X) bewegen kann,
- mindestens einen Pendelkörper (3), der enthält:
eine erste und eine zweite Pendelmasse (5), die einen axialen Abstand zueinander haben und bezüglich des Trägers (2) beweglich sind, wobei die erste Pendelmasse (5) axial auf einer ersten Seite (4) des Trägers (2) und die zweite Pendelmasse (5) axial auf einer zweiten Seite (4) des Trägers (2) angeordnet ist, und mindestens ein Verbindungsorgan (6) der ersten und der zweiten Pendelmasse (5), das die Massen paart,
- mindestens ein Lauforgan (11), das einerseits mit einer durch den Träger (2) definierten Laufbahn (12) und andererseits mit mindestens einer durch den Pendelkörper (3) definierten Laufbahn (13) zusammenwirkt, um die Bewegung des Pendelkörpers (3) bezüglich des Trägers (2) zu führen, und
- mindestens ein Zwischenfügungsbauteil (30, 31), das so angeordnet ist, dass es den Kontakt in axialer Richtung (X) zwischen einer der Pendelmassen (5) und mindestens einem vom Lauforgan (11) und vom Träger (2) verhindert, **dadurch gekennzeichnet, dass** das Zwischenfügungsbauteil (30, 31) enthält:
- einen Zwischenfügungsabschnitt (33), der konfiguriert ist, den Kontakt in axialer Richtung (X) zu verhindern, und
- mindestens einen Befestigungsabschnitt (34) an einer der Pendelmassen (5) oder an einem vom Lauforgan (11) und vom Träger (2), wobei der Befestigungsabschnitt (34) mindestens zwei Befestigungslaschen (36) und eine diese zwei Laschen (36) verbindende Verstärkung (45) enthält.

2. Vorrichtung nach Anspruch 1, wobei der Befestigungsabschnitt (34) sich zwischen einem vom Zwischenfügungsabschnitt (33) ansteigenden Ende (39) und einem freien Ende (40) erstreckt, wobei jede Befestigungslasche (36) sich zwischen diesen Enden (39, 40) erstreckt.

3. Vorrichtung nach Anspruch 2, wobei die Verstärkung (45) sich über eine Länge erstreckt, die zwischen 5% und 65%, insbesondere zwischen 10% und 50%, der zwischen ihren beiden Enden (39, 40) gemessenen Länge jeder Befestigungslasche (36) liegt.

4. Vorrichtung nach Anspruch 2 oder 3, wobei die Verstärkung (45) die Laschen (36) im Bereich ihres vom Zwischenfügungsabschnitt (33) ansteigenden Endes (39) verbindet.

5. Vorrichtung nach Anspruch 4, wobei die Verstärkung (45) eine Randleiste ist, die sich vom Zwischenfügungsabschnitt (33) aus erstreckt.

6. Vorrichtung nach einem der Ansprüche 1 bis 5, wobei jede Befestigungslasche (36) einen Haken zum Einklinken des Zwischenfügungsbauteils (30, 31) auf einer der Pendelmassen (5) oder auf einem vom Träger (2) oder vom Lauforgan (11) enthält.

7. Vorrichtung nach einem der vorhergehenden Ansprüche, wobei der Befestigungsabschnitt (34) mindestens drei Laschen (36) enthält, und die Verstärkung (45) diese drei Laschen (36) paarweise verbindet.

8. Vorrichtung nach einem der vorhergehenden Ansprüche, wobei die vom Pendelkörper (3) definierte Laufbahn (13) vom Verbindungsorgan (6) definiert wird.

9. Vorrichtung nach einem der vorhergehenden Ansprüche, wobei das Zwischenfügungsbauteil (30, 31) von einer der ersten und zweiten Pendelmassen (5) getragen wird.

10. Vorrichtung nach Anspruch 9, wobei der Zwischenfügungsabschnitt (33) des Zwischenfügungsbauteils (31) eine Aufnahme (50) enthält, die bei der ganzen oder einem Teil der Bewegung des Lauforgans (11) entlang der vom Pendelkörper (2) definierten Laufbahn (13) mit einem axialen Ende (51) des Lauforgans (11) zusammenwirkt.

11. Vorrichtung nach Anspruch 9 oder 10, wobei der Zwischenfügungsabschnitt (33) des Zwischenfügungsbauteils (31) axial zwischen der Pendelmasse (5) und dem Lauforgan (11) angeordnet ist, und dieser Zwischenfügungsabschnitt (31) eine Fläche aufweist, die gewählt wird, um den Kontakt in axialer Richtung (X) zwischen dem Lauforgan (11) und der Pendelmasse (5) für mehrere unterschiedliche Stellungen des Lauforgans (11) entlang der vom Pendelkörper (3) definierten Laufbahn (13) zu vermeiden.

12. Vorrichtung nach einem der Ansprüche 9 bis 11, wobei die erste Pendelmasse (5) mindestens ein Zwischenfügungsbauteil (30, 31) trägt, das so angeordnet ist, dass es den Kontakt in axialer Richtung (X) zwischen dieser ersten Pendelmasse (5) und mindestens einem vom Lauforgan (11) oder vom Träger (2) verhindert, und die zweite Pendelmasse (5) mindestens ein Zwischenfügungsbauteil (30, 31) trägt, das so angeordnet ist, dass es den Kontakt in axialer Richtung (X) zwischen dieser zweiten Pendelmasse (5) und mindestens einem vom Lauforgan (11) und vom Träger (2) verhindert.

13. Bauteil für ein Übertragungssystem eines Kraftfahrzeugs, wobei das Bauteil insbesondere einen Doppelschwungraddämpfer, einen hydrodynamischen Drehmomentwandler oder eine Reibscheibe ist und eine Dämpfungsvorrichtung (1) nach einem der Ansprüche 1 bis 12 umfasst.

14. Bauteil nach Anspruch 13, wobei der Träger (2) der Vorrichtung einer ist von:
- einer Zwischenscheibe des Bauteils,
- einer Führungsscheibe des Bauteils,
- einer Phasenscheibe des Bauteils, oder
- einem von der Zwischenscheibe, der Führungsscheibe und der Phasenscheibe verschiedener Träger.

## Claims

1. Torsional oscillation damping device (1) comprising:
- a support (2) that can be rotationally displaced about an axis (X),
- at least one pendulous body (3) comprising a first and a second pendulous weight (5) spaced apart axially from one another and mobile relative to the support (2), the first pendulous weight (5) being arranged axially on a first side (4) of the support (2) and the second pendulous weight (5) being arranged axially on a second side (4) of the support (2), and at least one link member (6) linking the first and the second pendulous weights (5), pairing said weights,
- at least one rolling member (11) cooperating on the one hand with a rolling track (12) defined by the support (2) and on the other hand with at least one rolling track (13) defined by the pendulous body (3) to guide the displacement of the pendulous body (3) relative to the support (2), and
- at least one insertion part (30, 31), arranged so as to avoid any contact in the axial direction (X) between one of said pendulous weights (5) and at least one of the rolling member (11) and the support (2), **characterized in that** the insertion part (30, 31) comprising:
- an insertion portion (33) configured to prevent said contact in the axial direction (X), and
- at least one fixing portion (34) on one of the pendulous weights (5) or on one of the rolling member (11) and the support (2), the fixing portion (34) comprising at least two fixing tabs (36) and a reinforcement (45) linking these two tabs (36).

2. Device according to Claim 1, the fixing portion (34) extending between an end (39) emerging from the insertion portion (33) and a free end (40), each fixing tab (36) extending between these ends (39, 40).

3. Device according to Claim 2, the reinforcement (45) extending over a length of between 5% and 65%, notably between 10% and 50%, of the length measured between its two ends (39, 40) of each fixing tab (36).

4. Device according to Claim 2 or 3, the reinforcement (45) linking the tabs (36) at their end (39) emerging from the insertion portion (33).

5. Device according to Claim 4, the reinforcement (45) being a flange extending from the insertion portion (33).

6. Device according to any one of Claims 1 to 5, each fixing tab (36) comprising a hook for snap-fitting the insertion part (30, 31) onto one of the pendulous masses (5) or onto one of the support (2) and the rolling member (11).

7. Device according to any one of the preceding claims, the fixing portion (34) comprising at least three tabs (36) and the reinforcement (45) linking these three tabs (36) two by two.

8. Device according to any one of the preceding claims, the rolling track (13) defined by the pendulous body (3) being defined by the link member (6).

9. Device according to any one of the preceding claims, the insertion part (30, 31) being borne by either the first or the second pendulous weight (5).

10. Device according to Claim 9, the insertion portion (33) of the insertion part (31) comprising a slot (50) cooperating with an axial end (51) of the rolling member (11) over all or part of the displacement of the rolling member (11) along the rolling track (13) defined by the pendulous body (2).

11. Device according to Claim 9 or 10, the insertion portion (33) of the insertion part (31) being arranged axially between said pendulous weight (5) and the rolling member (11) and this insertion portion (31) having a surface chosen to prevent any contact in the axial direction (X) between the rolling member (11) and said pendulous weight (5) for several distinct positions of the rolling member (11) along the rolling track (13) defined by the pendulous body (3).

12. Device according to any one of Claims 9 to 11, the first pendulous weight (5) bearing at least one insertion part (30, 31) arranged so as to avoid any contact in the axial direction (X) between this first pendulous weight (5) and at least one of the rolling member (11) and the support (12), and the second pendulous weight (5) bearing at least one insertion part (30, 31) arranged so as to avoid any contact in the axial direction (X) between this second pendulous weight (5) and at least one of the rolling member (11) and the support (2).

13. Component for a transmission system of a motor vehicle, the component being notably a dual damping flywheel, a hydrodynamic torque converter or a friction disc, comprising a damping device (1) according to any one of Claims 1 to 12.

14. Component according to Claim 13, the device support (2) being one out of:
- a web of the component,
- a guiding washer of the component,
- a phasing washer of the component, or
- a support distinct from said web, from said guiding washer and from said phasing washer.
